(19) Europäisches Patentamt
European Patent Office
Office européen des brevets

(11) Veröffentlichungsnummer : **0 476 452 B1**

# (12) EUROPÄISCHE PATENTSCHRIFT

(45) Veröffentlichungstag der Patentschrift :
**23.03.94 Patentblatt 94/12**

(51) Int. Cl.$^{5}$ : **C04B 41/64,** C09D 183/04

(21) Anmeldenummer : **91115066.2**

(22) Anmeldetag : **06.09.91**

## (54) Zubereitung zur wasserabweisenden Imprägnierung poröser mineralischer Baustoffe.

(30) Priorität : **19.09.90 DE 4029640**

(43) Veröffentlichungstag der Anmeldung :
**25.03.92 Patentblatt 92/13**

(45) Bekanntmachung des Hinweises auf die Patenterteilung :
**23.03.94 Patentblatt 94/12**

(84) Benannte Vertragsstaaten :
**BE DE FR GB IT NL**

(56) Entgegenhaltungen :
**EP-A- 0 143 541**

(56) Entgegenhaltungen :
**EP-A- 0 430 156**
**NL-A- 7 405 999**
**US-A- 3 983 265**
**US-A- 4 368 235**

(73) Patentinhaber : **Th. Goldschmidt AG**
**Goldschmidtstrasse 100**
**D-45127 Essen (DE)**

(72) Erfinder : **Schmuck, Manfred**
**Lauraberg 5**
**W-4300 Essen 17 (DE)**
Erfinder : **Seyffert, Heribert, Dr.**
**Zeissbogen 14**
**W-4300 Essen 1 (DE)**

**EP 0 476 452 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft eine Zubereitung zur wasserabweisenden Imprägnierung poröser mineralischer Baustoffe auf der Basis von Alkoxygruppen enthaltenden siliciumorganischen Verbindungen.

Seit vielen Jahren werden Organosilane oder Organosiloxane zur Imprägnierung poröser mineralischer Baustoffe eingesetzt, um diese vor dem Eindringen von Wasser zu schützen. Bei dieser hydrophobierenden Behandlung ist es besonders wichtig, daß die Wirkstoffe tief in den Baustoff eindringen und sich mit dem Baustoff chemisch oder physikalisch verbinden.

Die Penetration in den Baustoff wird begünstigt, wenn man als siliciumorganische Wirkstoffe möglichst niedermolekulare Verbindungen verwendet. Die Eindringtiefe kann zusätzlich durch die Mitverwendung organischer Lösungsmittel verbessert werden, die nach der Behandlung des Baustoffes verdunsten. Hohe Reaktivität wird erreicht, wenn als siliciumorganische Verbindungen Organoalkoxysilane und/oder Organoalkoxysiloxane eingesetzt werden, die unter Einfluß von Feuchtigkeit kondensieren und mit dem Baustoff reagieren können. Dabei wird der der Alkoxygruppe entsprechende Alkohol abgespalten, der in die Atmosphäre verdunstet.

Aus der DE-PS 33 12 911 ist eine solche Zubereitung mit einem Gehalt an Organoalkoxysiloxanen der allgemeinen Formel

$$R^1_a\text{-}\underset{\underset{O_{\frac{4-(a+b)}{2}}}{|}}{Si}\text{-}(OR^2)_b$$

bekannt, wobei
$R^1$ ein Alkyl- oder Arylrest,
$R^2$ ein Alkylrest mit 1 bis 4 Kohlenstoffatomen,
a = 0,8 bis 1,5 und
b $\leqq$ 2 ist.

Diese Zubereitung ist dadurch gekennzeichnet, daß sie aus

a) 1 bis 20 Gew.-% eines Gemisches von Organoalkoxysiloxanen der vorgenannten Formel, welches aus 25 bis 75 Gew.-% eines Siloxans, dessen Wert b = 0,1 bis 0,5 und 75 bis 25 Gew.-% eines Siloxans, dessen Wert b = 0,8 bis 2,0 ist, besteht, und wobei a + b $\leqq$ 3 ist,

b) 80 bis 99 Gew.-% eines nicht mit Wasser mischbaren Lösungsmittels und

c) gegebenenfalls an sich bekannten Kondensationskatalysatoren

besteht.

Das wesentliche Merkmal dieser Zubereitung besteht somit darin, die Imprägnierung nicht mit einem Organoalkoxysiloxan durchzuführen, dessen Molekulargewichtsverteilung im wesentlichen nur ein einziges Maximum aufweist, sondern ein Gemisch von Organoalkoxysiloxanen zu verwenden, dessen Kennzeichen im unterschiedlichen Kondensationsgrad besteht. Hierdurch wird eine hohe Eindringtiefe, verbunden mit hoher Wirksamkeit, insbesondere auf alkalischen Baustoffen, und ein guter, optisch sichtbarer Wasserabperleffekt gewährleistet.

Die in der DE-PS 33 12 911 beschriebenen Zubereitungen haben sich in der Praxis bewährt. Eine Verbesserung dieser Zubereitungen ist im wesentlichen nur hinsichtlich der in der Praxis erreichbaren Eindringtiefe möglich. Diese Eindringtiefe wird im wesentlichen von drei Faktoren beeinflußt, nämlich den verwendeten Lösungsmitteln, der Porosität der Baustoffe und der Sorgfalt, mit der die Anwendung dieser Zubereitungen in der Praxis erfolgt. Verbesserte Zubereitungen zur Imprägnierung müssen daher insbesondere an ihrem Penetrationsverhalten gemessen werden.

Infolge des gestiegenen Umweltbewußtseins wird die Verwendung organischer Lösungsmittel zunehmend als störend empfunden. Man hat sich deshalb insbesondere bemüht, vergleichbare Zubereitungen auf wäßriger Basis zu entwickeln.

Weitere Entwicklungsarbeiten haben zu einem Verfahren geführt, das Gegegenstand der DE-PS 36 27 060 ist. Diese Patentschrift betrifft ein Verfahren zum Imprägnieren von mineralischen Baustoffen, insbesondere Mauerwerk, mit wäßrigen Lösungen von Silanolen und/oder Siloxanolen, die am Ort ihrer Verwendung durch Hydrolyse von Alkoxysilanen und/oder Alkoxysiloxanen hergestellt werden, wobei man als Alkoxysilane und/oder Alkoxysiloxane Verbindungen der allgemeinen Formel

$$R^1_a Si(OR^2)_b \,|\, O_{\frac{4-(a+b)}{2}}$$

$R^1$ = Alkylrest mit 1 bis 8 Kohlenstoffatomen, wobei im mittleren Molekül mindestens 90 % der Reste $R^1$ Alkylreste mit 1 bis 4 Kohlenstoffatomen sind,
$R^2$ = Methyl- oder Ethylrest,
a = 0 bis 1,5,
b = 1,0 bis 4,0,
a+b = 2,0 bis 4,0,

auswählt, diese kontinuierlich in einer dem Verbrauch entsprechenden Menge hydrolysiert und die erhaltene Lösung innerhalb einer Zeitspanne von 3 bis 30 Minuten nach Vermischen der Reaktionspartner auf den mineralischen Baustoff aufbringt.

Bei dieser Verfahrensweise erzielt man eine hohe Penetration der wäßrigen Zubereitungen in den mineralischen Baustoff, die mit der Penetration vergleichbar ist, die man bei der Verwendung lösungsmittelhaltiger Zubereitungen erreicht.

Diese wäßrigen Lösungen müssen jedoch, wie in der DE-PS 36 27 060 gefordert, aufgrund ihrer Lagerinstabilität am Ort ihrer Verwendung hergestellt werden.

In der veröffentlichten europäischen Patentanmeldung 0 234 024 ist für Zwecke der Hydrophobierung keramischen Materials eine wäßrige Silanemulsion beschrieben, welche im wesentlichen besteht aus

a) 1 bis 40 Gew.-% eines hydrolysierbaren Silans mit einem Molekulargewicht bis zu etwa 500 und der allgemeinen Formel $R_nSi(R^1)_{4-n}$, wobei R ein gegebenenfalls halogenierter Kohlenwasserstoffrest mit 1 bis 20 C-Atomen, R' ein Alkoxyrest mit 1 bis 3 C-Atomen, ein Halogen-, Amino- oder Carboxylrest, n = 1 oder 2 ist, oder Oligomere dieser Silane und

b) 0,5 bis 50 Gew.-%, bezogen auf Silan, eines Emulgators mit einem HLB-Wert von 4 bis 15 und

c) Wasser.

Als besonders bevorzugtes Silan wird Octyltriethoxysilan genannt. Tatsächlich weisen Emulsionen derartiger Silane, bei denen der Rest R mehr als 6 Kohlenstoffatome aufweist, erhöhte Stabilität auf, da die Hydrolysegeschwindigkeit dieser reaktiven Silane herabgesetzt ist. Nachteilig ist jedoch, daß zwangsläufig auch die Hydrolyse dieser Silane im Baustoff entsprechend langsam erfolgt und in geeigneter Weise katalysiert werden muß. In einigen Baustoffen, wie frischem Beton, ist dies durch deren hohe Alkalität möglich. In neutralen oder schwach alkalischen Baustoffen, wie gebranntem Klinker und zahlreichen Natursteinen, ist dies jedoch nicht möglich. Ohne eine solche Katalyse erfolgt jedoch keine Verankerung der Silane an der Oberfläche des Baustoffes. Die Silane können von der Oberfläche verdunsten oder mechanisch entfernt werden. Dies führt zu einer Verarmung der Oberfläche an Silan und damit zu einer Verminderung der Hydrophobierung. Dies hat zur Folge, daß der Wasserabperleffekt schwach oder gar nicht vorhanden ist. Das Wasseraufnahmevermögen in der verarmten Oberflächenschicht ist hoch, so daß gerade diese der Witterung und dem mechanischen Angriff besonders ausgesetzte Schicht unzureichend geschützt ist. Diese Zubereitungen können somit nur bei bestimmten Baustoffen eingesetzt werden.

Eine Imprägnieremulsion mit guter Wirkung auf alkalischen und neutralen Baustoffen ist in der DE-OS 39 11 479 beschrieben. Sie enthält

2,5 bis 25 Gew.-% eines Alkoxysilans der allgemeinen Formel

$$R^1\text{-}Si(OR^2)_3 \qquad I$$

wobei

$R^1$ ein Alkylrest mit 3 bis 12 Kohlenstoffatomen und
$R^2$ ein Methyl- oder Ethylrest ist,

2 bis 20 Gew.-% eines Alkoxysiloxans der allgemeinen Formel

$$R^3_a\text{-}Si(OR^2)_b \,|\, O_{\frac{4-(a+b)}{2}} \qquad II$$

wobei

$R^3$ ein Alkylrest mit 1 bis 6 Kohlenstoffatomen,
a = 0,8 bis 1,2 und
b = 0,2 bis 1,2 ist,

0,01 bis 5 Gew.-% eines Emulgators,
0,01 bis 0,1 Gew.-% Füllstoffe mit einer wirksamen Oberfläche von mindestens 40 $m^2/g$ und
49,9 bis 95,48 Gew.-% Wasser.

Diese Imprägnieremulsion weist im allgemeinen gute Abperleffekte sowohl auf alkalischen wie auf neutralen mineralischen Substraten auf. Benotet man die mit dieser Emulsion erzielbaren Effekte nach dem weiter unter gegebenen Bewertungsschema, zeigt sich, daß die besten Ergebnisse erzielt werden, wenn

a) der Emulgatorgehalt niedrig ist,
b) in der Emulsion hydrophobierte Kieselsäure und
c) ein Härtungskatalysator für die siliciumorganischen Verbindungen

vorhanden ist.

Bei niedrigem Emulgatorgehalt ist aber die Stabilität der Imprägnieremulsion nur begrenzte Zeit gegeben. Ist in der Emulsion hydrophobierte Kieselsäure enthalten, setzt sich diese bei der Lagerung häufig ab und macht ein sorgfältiges Umrühren am Ort der Anwendung, also an der Baustelle, notwendig. Diese Sorgfalt ist nicht immer vorhanden. Der Härtungskatalysator begrenzt schließlich den zeitlichen Verarbeitungsspielraum der Emulsion und kann zur vorzeitigen Aushärtung des Wirkstoffs in der Emulsion bei der Lagerung führen.

Die vorliegende Erfindung befaßt sich mit dem Problem der Verbesserung der anwendungstechnischen Eigenschaften solcher Imprägnieremulsionen, insbesondere mit dem Problem der Herstellung lagerbeständiger Emulsionen, die zu einem hohen Abperleffekt innerhalb kurzer Zeit, in der Regel innerhalb eines Tages, führen, ohne daß ein Zusatz von hydrophobierter Kieselsäure oder spezieller Härtungskatalysatoren erforderlich ist. Der Abperleffekt soll einen Wert von 1 oder wenigstens von 1 bis 2 erreichen, wenn er wie folgt bestimmt wird:

Auf die waagerechte und mit der Imprägnieremulsion behandelte Prüffläche eines mineralischen Substrates wird mit einer Pipette 1 ml Leitungswasser aufgelegt. Nach 10 Minuten wird das noch aufstehende Wasser abgeschüttelt und die Kontaktfläche des Wassertropfens optisch beurteilt. Dabei bedeuten die Wertzahl:

1 keine Benetzung der Kontaktfläche;
2 Kontaktfläche zu 50 % benetzt;
3 Kontaktfläche zu 100 % benetzt;
4 Wasser teilweise eingezogen; leichte Dunkelfärbung der Kontaktfläche;
5 Wasser zu mindestens 50 % eingezogen; stärkere Dunkelfärbung der Kontaktfläche;
6 Tropfen vollständig eingezogen; starke Dunkelfärbung der Kontaktfläche;
7 Wassertropfen in weniger als 5 Minuten vollständig eingezogen.

Die erfindungsgemäße Zubereitung ist dadurch gekennzeichnet, daß sie aus einer Emulsion, enthaltend

a) 5 bis 45 Gew.-% eines Alkoxysilans der allgemeinen Formel

$$R^1\text{-Si-}(OR^2)_3$$

wobei

$R^1$ ein Alkylrest mit 1 bis 16 Kohlenstoffatomen und
$R^2$ ein Alkylrest mit 1 bis 4 Kohlenstoffatomen ist,

b) 45 bis 5 Gew.-% einer Mischung, bestehend aus einem

b1) Silan der allgemeinen Formel

$$R^3\text{-Si-}(OR^2)_3$$

wobei

$R^2$ die bereits angegebene Bedeutung hat und
$R^3$ ein Aminoalkylrest mit 1 bis 6 Kohlenstoffatomen, oder

ein Rest der allgemeinen Formel $H_2N\text{-}(CH_2)_xR^4\text{-}(CH_2)_y\text{-}$, in der

$R^4$ einen Sauerstoff-, Schwefel-, -NH-
oder
$-NH\text{-}CH_2\text{-}CH_2\text{-}NH$-Rest bedeutet und
$x \geqq 2$ und
$y \geqq 2$ ist, oder
ein Rest der allgemeinen Formel

$$(R^2O)_3Si\text{-}(CH_2)_x\text{-}NH\text{-}(CH_2)_x\text{-},$$

$R^2$ und x wie vorstehend definiert,

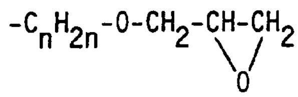

oder

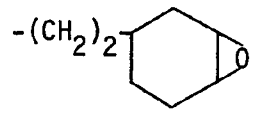

ist und
n eine ganze Zahl von 1 bis 5
bedeutet,

und

b2) einem Polysiloxan der allgemeinen Formel

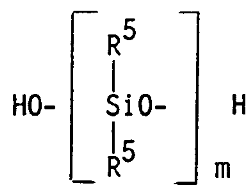

wobei

$R^5$ ein Methyl- oder Phenylrest ist, jedoch mindestens 90 % der Reste $R^5$ Methylreste sind und
m = 20 bis 250 ist,

wobei das Verhältnis von b1) zu b2) so gehalten ist, daß einer SiOH-Gruppe der Verbindung b2) > 1 bis 3 $OR^2$-Gruppen der Verbindung b1) entsprechen,

c) 0,5 bis 10 Gew.-% eines O/W-Emulgators oder Emulgatorgemisches und

d) 40 bis 49,5 Gew.-% Wasser,

besteht.

Bestandteil a) ist ein Alkoxysilan der allgemeinen Formel $R^1$-Si-$(OR^2)_3$. In dieser Formel ist $R^1$ ein Alkylrest mit 1 bis 16 Kohlenstoffatomen. Der Alkylrest kann geradkettig oder verzweigt sein. Bevorzugt ist ein geradkettiger Alkylrest. Beispiele geeigneter Alkylreste sind der Methyl-, Ethyl-, Butyl-, i-Butyl-, Hexyl-, Octyl-, Decyl-, Dodecyl- und Hexadecylrest.

$R^2$ ist ein Alkylrest mit 1 bis 4 Kohlenstoffatomen. Beispiele für den Rest $R^2$ sind der Methyl-, Ethyl-, Propyl- und der Butylrest. Bevorzugt ist der Methyl- und Ethylrest.

Bestandteil b1) ist ein Alkoxysilan der allgemeinen Formel $R^3$-Si-$(OR^2)_3$. Während der Rest $R^2$ die bereits angegebene Bedeutung hat, ist der Rest $R^3$ dadurch gekennzeichnet, daß er eine reaktive Gruppe hat und über Kohlenstoff mit dem Siliciumatom verbunden ist. $R^3$ kann dabei folgende Bedeutung haben:

(1) $R^3$ = Aminoalkylrest, dessen Alkylrest 1 bis 6 Kohlenstoffatome aufweist. Beispiele solcher Reste sind der Ethyl-, Propyl-, Butyl- und Hexylaminrest, wobei die Reste $-(CH_2)_3-NH_2$ und

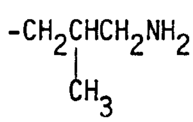

bevorzugt sind.

(2) $R^3$ = Rest der allgemeinen Formel $H_2N-(CH_2)_xR^4-(CH_2)_y-$, in der $R^4$ einen Sauerstoff-, Schwefel-, -NH- oder $-NH-CH_2-CH_2-NH-$Rest bedeutet und $x \geqq 2$ und $y \geqq 2$ ist. Beispiele solcher Reste sind $H_2N-(CH_2)_3-$ und $H_2N-(CH_2)_2-NH-(CH_2)_3-$.

(3) $(R^2O)_3Si-(CH_2)_x-NH-(CH_2)_x-$. Beispiele solcher Reste sind $(C_2H_5O)_3Si-(CH_2)_3-NH-(CH_2)_3-$ und $(CH_3)_3Si-(CH_2)_2-NH-(CH_2)_2-$.

(4) $R^3$ = Rest der allgemeinen Formel

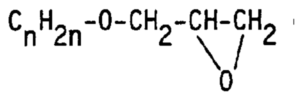

oder

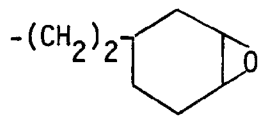

ist und n eine ganze Zahl von 1 bis 5 bedeutet. Ein Beispiel für ein besonders bevorzugtes Epoxid ist

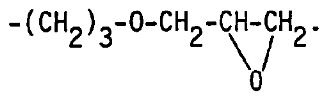

Dabei sind als Reste $R^3$ diejenigen mit der Bedeutung $-(CH_2)_3-NH_2$, $-(CH_2)_2-NH-(CH_2)_3-NH_2$ oder (4) besonders bevorzugt.

Bestandteil b2) ist ein α,ω-Siloxanol der allgemeinen Formel

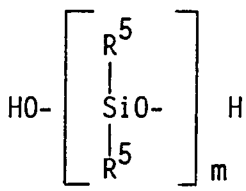

in dem $R^5$ ein Methyl- oder Phenylrest ist. Mindestens 90 % der Reste $R^5$ müssen Methylreste sein. Besonders bevorzugt sind α,ω-Dimethylsiloxanole. m hat einen Wert von 20 bis 250 und hat vorzugsweise einen Wert von 30 bis 80.

Das Verhältnis der Bestandteile b1) zu b2) ist so einzustellen, daß einer SiOH-Gruppe der Verbindung b2) > 1 bis 3 $OR^2$-Gruppen der Verbindung b1) entsprechen. Vorzugsweise beträgt das Verhältnis OH : $OR^2$ 1 : 2.

Bestandteil (c) ist ein O/W-Emulgator oder ein Gemisch solcher Emulgatoren. Im allgemeinen verwendet man als Emulgatoren nichtionogene Emulgatoren, d. h. Anlagerungsprodukte von Alkylenoxiden, vorzugsweise Ethylenoxid, an Verbindungen mit aktivem Wasserstoff, wie Fettalkohole, Alkylphenole, wie Octylphenol, Nonylphenol oder Dodecylphenol. Der Gehalt an Oxyethyleneinheiten soll dabei so groß sein, daß der HLB-Wert der Emulgatoren zwischen 6 und 20, insbesondere 10 und 18, liegt.

Man kann jedoch auch die aus dem Stand der Technik bekannten anionischen oder kationischen Emulgatoren, gegebenenfalls in Mischung mit nichtionogenen Emulgatoren, verwenden.

Die gewichtsprozentuale Zusammensetzung der Emulsion ist vorzugsweise

| | |
|---|---|
| 20 bis 30 Gew.-% | Bestandteil a), |
| 30 bis 20 Gew.-% | Bestandteil b1) + b2) im Verhältnis 4 : 3, |
| 3 bis 7 Gew.-% | Emulgator, |
| 47 bis 43 Gew.-% | Wasser. |

Die Herstellung der erfindungsgemäßen Emulsion kann in der Weise erfolgen, daß man die Bestandteile a), b1) und b2) getrennt emulgiert oder eine Mischung der Bestandteile gemeinsam emulgiert. Dabei wird zweckmäßig der Emulgator der zu emulgierenden Komponente (oder zu deren Gemisch) gegeben und das emulgatorhaltige Gemisch gegebenenfalls erwärmt. Zu dieser Mischung wird dann unter gutem Rühren das Wasser zugegeben. Die entstehende oder entstandene Emulsion kann mittels geeigneten Rührvorrichtungen, die vorzugsweise nach dem Rotor/Stator-Prinzip arbeiten, homogenisiert werden. Es können auch Kolloidmühlen zur Verminderung der Teilchengröße der emulgierten Phase verwendet werden.

Eine Abänderung der Zubereitung nach der vorliegenden Erfindung ist dadurch gekennzeichnet, daß die

Komponenten b1) und b2) nicht einzeln, sondern als Umsetzungsprodukt enthalten sind, welches dadurch erhalten ist, daß man vor der Emulgierung die Komponenten b1) und b2) unter Berücksichtigung der stöchiometrischen Verhältnisse durch Erhitzen auf 150 bis 200°C ganz oder teilweise miteinander umsetzt. Es hat sich gezeigt, daß bei Verwendung einer solchen abgeänderten erfindungsgemäßen Zubereitung ebenfalls gute Ergebnisse in bezug auf den Abperleffekt erzielt werden.

Ein Optimum an Eindringtiefe des Imprägnierungsmittels, Abperleffekt und Verminderung der Anschmutzbarkeit der behandelten Baustoffe wird gemäß einer besonders bevorzugten Variante der Erfindung dadurch erreicht, daß bis zu 50 Gew.-% der Komponente b) durch gleiche Mengen eines Siloxans der allgemeinen Formel

$$\begin{array}{c} R^6_a-\underset{\displaystyle \underset{\frac{4-(a+b)}{2}}{O}}{\underset{|}{Si}}-(OR^7)_b \end{array}$$

wobei

$R^6$ ein Alkylrest mit 1 bis 8 Kohlenstoffatomen oder ein Phenylrest und
$R^7$ ein Alkylrest mit 1 bis 4 Kohlenstoffatomen ist,
a = 0,8 bis 1,2 und
b = 0,2 bis 1,2 ist

ersetzt sind.

Entsprechend der Definition des Siloxans handelt es sich um ein Siloxanharz, welches unter Einwirkung von Luftfeuchtigkeit aushärtet. $R^6$ ist vorzugsweise ein geradkettiger Alkylrest mit 1 bis 8 Kohlenstoffatomen, insbesondere ein Methyl-, Ethyl-, Butyl-, Hexyl- oder Octylrest. $R^6$ kann auch die Bedeutung eines Phenylrestes haben, wobei innerhalb des polymeren Moleküls $R^6$ gleich oder verschieden sein kann. $R^7$ ist vorzugsweise ein Methyl- oder Ethylrest.

Die erfindungsgemäßen Zubereitungen erfüllen alle eingangs gestellten Anforderungen bezüglich verbesserter Stabilität und verbessertem Abperleffekt. In den folgenden Beispielen wird die Herstellung erfindungsgemäßer Emulsionen näher beschrieben, und es werden ihre anwendungstechnischen Eigenschaften im Vergleich zu Zubereitungen des Standes der Technik gezeigt.

## Beispiel 1

6,86 g γ-Aminopropyltriethoxysilan werden mit 93,14 g eines Polysiloxandiols mit einem Molgewicht von 4000 vermischt. Hieraus ergibt sich ein Molverhältnis von Polysiloxandiol : Aminoalkylsilan = 3 : 4. Der Mischung werden 150 g Octyltriethoxysilan zugegeben.

25 g eines Emulgatorgemisches, bestehend aus einem ethoxylierten Triglycerid mit einem HLB-Wert von 18 und einem ethoxylierten Fettalkohol mit einem HLB-Wert von 11 im Gewichtsverhältnis von 6 : 4, werden in 225 g Wasser gelöst. In die Lösung wird das Silan-/Siloxan-Gemisch gerührt und mittels einer Emulgiermaschine (Spalthomogenisator) zu einer stabilen Emulsion verarbeitet.

## Beispiel 2

Ein Gemisch aus 100 g Polysiloxandiol eines Molgewichtes von 6803 und 32,5 g γ-Aminopropyltriethoxysilan wird unter Rühren und Durchleiten von Stickstoff auf 180°C erwärmt und etwa 4 Stunden bei dieser Temperatur gehalten, bis 8,8 g Ethanol ausgetrieben worden sind. Das entstandene Produkt wird anschließend abgekühlt.

125 g dieses Produktes werden mit 125 g Isobutyltrimethoxysilan gemischt. Die Zubereitung wird mit 20 g eines Emulgatorgemisches, bestehend aus einem ethoxylierten Alkylphenol und einem Methylpolyoxethylen(15)cocoammoniumchlorid im Gewichtsverhältnis 1 : 1, versetzt und nach Zugabe von 355 g Wasser mit einem nach dem Rotor-/Stator-Prinzip arbeitenden Gerät zu einer Emulsion verarbeitet.

## Beispiel 3

3200 g Polysiloxandiol mit einem Molgewicht von 10 666 und 94,4 g 3-Glycidyloxypropyltrimethoxysilan werden miteinander vermischt. Unter Rühren und Durchleiten von Stickstoff wird diese Mischung auf 170°C erwärmt. Nach ca. 5 Stunden sind 11,5 g Methanol ausgetrieben. Das entstandene Umsetzungsprodukt wird

danach gekühlt.

25 g eines Emulgatorgemisches, bestehend aus einem ethoxylierten Fettalkohol und einem Alkylarylsulfonat in einem Mengenverhältnis von 3 : 7, werden in 225 g Wasser gelöst. Diese Lösung wird mit 140 g des oben erhaltenen Umsetzungsproduktes und 110 g n-Propyltriethoxysilan gemischt. Die erhaltene grobe Emulsion wird dreimal durch einen Spalthomogenisator gepumpt. Es entsteht eine stabile Emulsion.

Beispiel 4

5,15 g γ-Aminopropyltriethoxysilan werden mit 69,85 g Polysiloxandiol mit einem Molgewicht von 4000 und 25 g eines Siloxans der allgemeinen Formel

$$CH_3-\underset{\substack{|\\ O_{\frac{4-(1+0,4)}{2}}}}{Si}-(OC_2H_5)_{0,4}$$

vermischt. Der Mischung werden 150 g Octyltriethoxysilan zugegeben.

25 g eines Emulgatorgemisches, bestehend aus einem Triglycerid mit einem HLB-Wert von 18 und einem ethoxylierten Fettalkohol mit einem HLB-Wert von 11 im Gewichtsverhältnis von 6 : 4, werden in 225 g Wasser gelöst. Die Lösung wird in das Silan-/Siloxan-Gemisch gerührt und mittels einer Emulgiermaschine (Spalthomogenisator) zu einer stabilen Emulsion verarbeitet.

Beispiel 5

3,43 g γ-Aminopropyltriethoxysilan werden mit 46,57 g eines Polysiloxandiols mit einem Molgewicht von 4000 und 50 g eines Siloxans der allgemeinen Formel

$$CH_3-\underset{\substack{|\\ O_{\frac{4-(1+0,65)}{2}}}}{Si}-(OC_2H_5)_{0,65}$$

vermischt. Der Mischung werden 150 g Octyltriethoxysilan zugegeben.

25 g eines Emulgatorgemisches, bestehend aus einem Triglycerid mit einem HLB-Wert von 18 und einem ethoxylierten Fettalkohol mit einem HLB-Wert von 11 im Gewichtsverhältnis von 6 : 4, werden in 225 g Wasser gelöst. Die Lösung wird in das Silan-/Siloxan-Gemisch gerührt und mittels einer Emulgiermaschine (Spalthomogenisator) zu einer stabilen Emulsion verarbeitet.

Anwendungstechnische Prüfungen

Die eine Woche im Normalklima (20°C/65 % relative Feuchte) klimatisierten Prüfkörper aus Kalksandstein mit einer Kantenlänge von 6 cm werden 60 Sekunden in die auf 10 % Wirkstoff eingestellte Emulsion getaucht und im Normalklima getrocknet. Die Prüfung der Eigenschaften erfolgt eine Woche nach Imprägnierung.

1. Wasseraufnahme

Die Wasseraufnahme wird folgendermaßen bestimmt:

Die imprägnierten und getrockneten Prüfkörper werden 24 Stunden unter Wasser gelagert. Die überstehende Wassersäule beträgt dabei 5 cm. Nach dem Herausnehmen wird das äußerlich anhaftende Wasser mit Filterpapier entfernt. Die Prüfkörper werden erneut gewogen. Die Wasseraufnahme errechnet sich nach folgender Formel:

Wasseraufnahme (Gew.-%) = (a-b) * 100/b

a = Gewicht des Prüfkörpers nach Wasserlagerung.

b = Gewicht des Prüfkörpers vor Wasserlagerung.

Die Imprägniertiefe wird wie folgt bestimmt:

Die Prüfkörper werden gespalten und die Bruchstellen mit Wasser benetzt. Der hydrophobierte, nicht benetzte helle Rand wird ausgemessen.

Es werden folgende Ergebnisse erhalten:

| Emulsion von Beispiel | Abperleffekt | Imprägniertiefe [mm] | Wasseraufnahme [Gew.-%] |
|---|---|---|---|
| 1 | 1 | 3 | 2,1 |
| 2 | 2 | 2 - 3 | 2,0 |
| 3 | 1 - 2 | 2 - 3 | 2,4 |
| 4 | 1 | 3 | 2,2 |
| 5 | 1 | 3 | 2,1 |

2. Anschmutzung

Um die Anschmutzbarkeit zu prüfen, werden Prüfkörper aus Kalksandstein mit einer Kantenlänge von 6 cm eine Woche im Normalklima (20°C/65 % rel. Feuchte) gelagert und 60 Sekunden in die auf 10 % Wirkstoff eingestellten Emulsionen der Beispiele 1, 4 und 5 getaucht und eine Woche im Normalklima getrocknet. Danach wird trockener Staub auf die flache Oberseite der Kalksandsteine aufgebracht, so daß die Flächen vollständig bedeckt sind. Die so behandelten Steine werden 24 Stunden bei 60°C und 24 Stunden bei 80°C im Trockenschrank gelagert, danach entnommen, und nach dem Erkalten wird der Staub durch Pinseln entfernt. Die anhaftende Menge Staub wird visuell im Vergleich zu einer nicht mit Staub behandelten Fläche beurteilt.

Die Angaben in den Spalten geben die Menge anhaftenden Staubes in % an:

| Beispiele | 24 Stunden bei 60°C gelagert | 24 Stunden bei 80°C gelagert |
|---|---|---|
| 1 | 10 | 30 |
| 4 | 0 | 10 |
| 5 | 0 | 0 |

**Patentansprüche**

1. Zubereitung zur wasserabweisenden Imprägnierung poröser mineralischer Baustoffe auf der Basis von Alkoxygruppen enthaltenden siliciumorganischen Verbindungen, dadurch gekennzeichnet, daß sie aus einer Emulsion, enthaltend

   a) 5 bis 45 Gew.-% eines Alkoxysilans der allgemeinen Formel

   $$R^1\text{-Si-}(OR^2)_3$$

   wobei

   $R^1$ ein Alkylrest mit 1 bis 16 Kohlenstoffatomen und

   $R^2$ ein Alkylrest mit 1 bis 4 Kohlenstoffatomen ist,

   b) 45 bis 5 Gew.-% einer Mischung, bestehend aus einem

   b1) Silan der allgemeinen Formel

$$R^3\text{-Si-}(OR^2)_3$$

wobei

$R^2$ die bereits angegebene Bedeutung hat und

$R^3$ ein Aminoalkylrest mit 1 bis 6 Kohlenstoffatomen, oder ein Rest der allgemeinen Formel

$$H_2N\text{-}(CH_2)_xR^4\text{-}(CH_2)_y\text{-},$$

in der

$R^4$ einen Sauerstoff-, Schwefel-, -NH- oder -NH-$CH_2$-$CH_2$-NH-Rest bedeutet und

$x \geqq 2$ und

$y \geqq 2$ ist, oder

ein Rest der allgemeinen Formel

$$(R^2O)_3Si\text{-}(CH_2)_x\text{-NH-}(CH_2)_x\text{-},$$

$R^2$ und x wie vorstehend definiert,

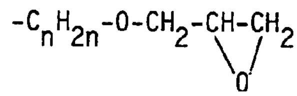

oder

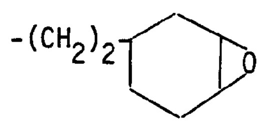

ist und

n eine ganze Zahl von 1 bis 5 bedeutet,

und

b2) einem Polysiloxan der allgemeinen Formel

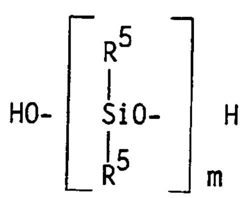

wobei

$R^5$ ein Methyl- oder Phenylrest ist, jedoch mindestens 90 % der Reste $R^5$ Methylreste sind

und

m = 20 bis 250 ist,

wobei das Verhältnis von b1) zu b2) so gehalten ist, daß einer SiOH-Gruppe der Verbindung b2) > 1 bis 3 $OR^2$-Gruppen der Verbindung b1) entsprechen,

c) 0,5 bis 10 Gew.-% eines O/W-Emulgators oder Emulgatorgemisches und

d) 40 bis 49,5 Gew.-% Wasser,

besteht.

**2.** Zubereitung nach Anspruch 1, dadurch gekennzeichnet, daß

$R^1$ ein Alkylrest mit 3 bis 8 Kohlenstoffatomen,

$R^2$ ein Methyl- oder Ethylrest,

$R^3$ ein $H_2N\text{-}(CH_2)_3$- oder ein $H_2N\text{-}(CH_2)_2\text{-NH-}(CH_2)_3$-Rest oder ein Rest

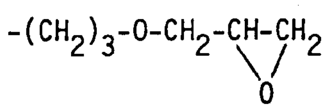 oder 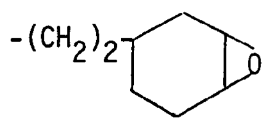 ,

$R^5$ ein Methylrest ist und der Index
m einen Wert von 30 bis 80 hat.

3. Zubereitung nach Anspruch 1 oder 2, dadurch gekennzeichnet, daß sie aus einer Emulsion von

| | |
|---|---|
| 20 bis 30 Gew.-% | des Bestandteils a), |
| 30 bis 20 Gew.-% | der Bestandteile b1) und b2) im Gewichtsverhältnis 4 : 3, |
| 3 bis 7 Gew.-% | Emulgator und |
| 47 bis 43 Gew.-% | Wasser |

besteht.

4. Abänderung der Zubereitung nach einem oder mehreren der vorhergehenden Ansprüche, dadurch gekennzeichnet, daß die Komponenten b1) und b2) nicht einzeln, sondern als Umsetzungsprodukt enthalten sind, welches dadurch erhalten ist, daß man vor der Emulgierung die Komponenten b1) und b2) unter Berücksichtigung der stöchiometrischen Verhältnisse durch Erhitzen auf 150 bis 200°C ganz oder teilweise miteinander umsetzt.

5. Abänderung der Zubereitung nach einem oder mehreren der vorhergehenden Ansprüche, dadurch gekennzeichnet, daß bis zu 50 Gew.-% der Komponente b) durch gleiche Mengen eines Siloxans der allgemeinen Formel

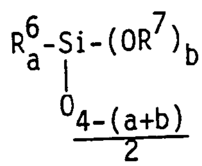

wobei
$R^6$ ein Alkylrest mit 1 bis 8 Kohlenstoffatomen oder ein Phenylrest und
$R^7$ ein Alkylrest mit 1 bis 4 Kohlenstoffatomen ist,
a = 0,8 bis 1,2 und
b = 0,2 bis 1,2 ist
ersetzt sind.

## Claims

1. Preparation for water-repellent impregnation of porous mineral building materials, based on alkoxy-containing organosilicon compounds, characterized in that it comprises an emulsion containing
a) from 5 to 45 % by weight of an alkoxysilane of the general formula

$$R^1\text{-Si-}(OR^2)_3$$

where
$R^1$ is an alkyl radical having from 1 to 16 carbon atoms and
$R^2$ is an alkyl radical having from 1 to 4 carbon atoms,
b) from 45 to 5 % by weight of a mixture comprising
b1) a silane of the general formula

$$R^3\text{-Si-}(OR^2)_3$$

where
$R^2$ has the meaning already given and
$R^3$ is an aminoalkyl radical having from 1 to 6 carbon atoms, or a radical of the general formula

$$H_2N\text{- }(CH_2)_xR^4\text{- }(CH_2)_y\text{-},$$

in which

$R^4$ is an oxygen, sulphur,

-NH-

or

$-NH-CH_2-CH_2-NH-$ radical

and

$x \geqq 2$ and

$y \geqq 2$, or

a radical of the general formula

$$(R^2O)_3Si-(CH_2)_x-NH-(CH_2)_x-,$$

$R^2$ and x being as defined above,

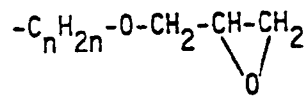

or

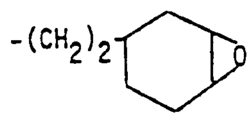

and

n is an integer from 1 to 5,

and

b2) a polysiloxane of the general formula

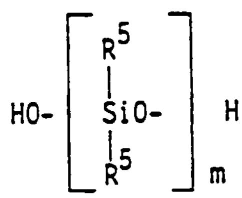

where

$R^5$ is a methyl or phenyl radical with at least 90 % of the radicals $R^5$ being methyl radicals and

m = from 20 to 250,

where the ratio of b1) to b2) is maintained so that corresponding to one SiOH group of the compound b2) there are from >1 to 3 $OR^2$ groups of the compound b1),

c) from 0.5 to 10 % by weight of an O/W emulsifier or emulsifier mixture and

d) from 40 to 49.5 % by weight of water.

**2.** Preparation according to Claim 1, characterized in that

$R^1$ is an alkyl radical having from 3 to 8 carbon atoms,

$R^2$ is a methyl or ethyl radical,

$R^3$ is a $H_2N-(CH_2)_3-$ or a $H_2N-(CH_2)_2-NH-(CH_2)_3-$ radical or a radical

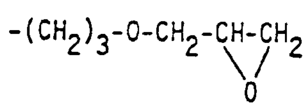

or

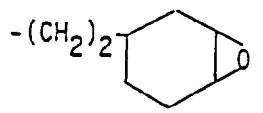 ,

$R^5$ is a methyl radical and the index m has a value of from 30 to 80.

3. Preparation according to Claim 1 or 2, characterized in that it comprises an emulsion of
   from 20 to 30 % by weight of component a),
   from 30 to 20 % by weight of components b1) and b2) in the weight ratio of 4:3,
   from 3 to 7 % by weight of emulsifier and
   from 47 to 43 % by weight of water.

4. Alteration to the preparation according to one or more of the preceding claims, characterized in that the components b1) and b2) are contained not individually but as the reaction product obtained by completely or partially reacting components b1) and b2) with one another, prior to emulsification, in the appropriate stoichiometric ratio by heating to from 150 to 200°C.

5. Alteration to the preparation according to one or more of the preceding claims, characterized in that up to 50 % by weight of component b) are replaced by the same amounts of a siloxane of the general formula

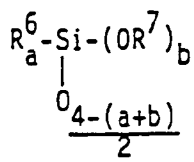

where
$R^6$ is an alkyl radical having from 1 to 8 carbon atoms or a phenyl radical and
$R^7$ is an alkyl radical having from 1 to 4 carbon atoms,
a = from 0.8 to 1.2 and
b = from 0.2 to 1.2.

## Revendications

1. Composition pour l'imprégnation hydrofuge de matériaux de construction minéraux poreux, à base de composés organosiliciés contenant des groupes alcoxy, caractérisée en ce qu'elle est formée d'une émulsion contenant :
   a) de 5 à 45 % en poids d'un alcoxysilane de formule générale

$$R^1\text{-}Si\text{-}(OR^2)_3$$

   où $R^1$ est un reste alkyle ayant de 1 à 16 atomes de carbone,
   et $R^2$ est un reste alkyle ayant de 1 à 4 atomes de carbone,
   b) de 45 à 5 % en poids d'un mélange formé de
   b1) un silane de formule générale

$$R^3\text{-}Si\text{-}(OR^2)_3$$

   où $R^2$ a la signification déja indiquée,
   et $R^3$ est un reste aminoalkyle ayant de 1 à 6 atomes de carbone, ou un reste répondant à la formule générale $H_2N\text{-}(CH_2)_xR^4\text{-}(CH_2)_y\text{-}$, dans laquelle $R^4$ signifie un reste d'oxygène, de soufre, ou le reste -NH- ou

$$\text{-}NH\text{-}CH_2\text{-}CH_2\text{-}NH\text{-},$$

   $x \geqq 2$ et $y \geqq 2$,
   ou un reste répondant à la formule générale $(R^2O)_3Si\text{-}(CH_2)_x\text{-}NH\text{-}(CH_2)_x\text{-}$, où $R^2$ et x sont définis commme précédemment,

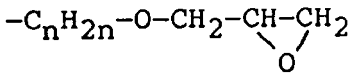 ou 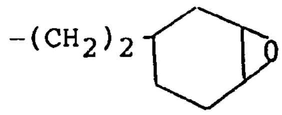

et n signifie un nombre entier valant de 1 à 5, et
b2) un polysiloxane de formule générale

$$HO-\left[\begin{array}{c} R^5 \\ | \\ SiO- \\ | \\ R^5 \end{array}\right]_m H$$

où $R^5$ est un reste méthyle ou phényle, mais au moins 90% des restes $R^5$ sont des restes méthyle, et m = 20 à 250, le rapport de b1) à b2) étant maintenu d'une manière telle qu'à un groupe SiOH du composé b2) correspondent > 1 à 3 groupes $OR^2$ du composé b1),

c) de 0,5 à 10 % en poids d'un émulsifiant ou d'un mélange d'émulsifiants huile dans eau, et
d) de 40 à 49,5 % en poids d'eau.

**2.** Composition selon la revendication 1, caractérisée en ce que
$R^1$ est un reste alkyle ayant de 3 à 8 atomes de carbone,
$R^2$ est un reste méthyle ou éthyle,
$R^3$ est un reste $H_2N-(CH_2)_3-$
ou un reste $H_2N-(CH_2)_2-NH-(CH_2)_3-$
ou un reste

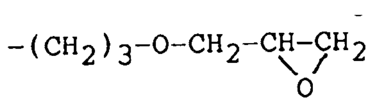 ou 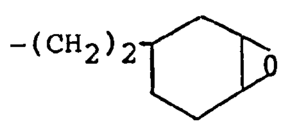 ,

$R^5$ est un reste méthyle,
et l'indice m vaut de 30 à 80.

**3.** Composition selon la revendication 1 ou 2, caractérisée en ce qu'elle formée d'une émulsion de
20 à 30 % en poids de composant a),
30 à 20 % en poids des composants b1) et b2) selon le rapport pondéral de 4:3,
3 à 7 % en poids d'émulsifiant, et
47 à 43 % en poids d'eau.

**4.** Variante de la composition selon une ou plusieurs des revendications précédentes, caractérisée en ce que les composants b1) et b2) ne sont pas contenus individuellement, mais sous la forme d'un produit de réaction qu'on obtient en faisant réagir ensemble les composants b1) et b2), complètement ou partiellement, avant l'émulsification, en prenant en considération les rapports stoechiomé- triques, en les chauffant à une température située entre 150 et 200°C.

**5.** Variante de la composition selon une ou plusieurs des revendications précédentes, caractérisée en ce que jusqu'à 50 % en poids du composant b) sont remplacés par des quantités correspondantes d'un siloxane de formule générale

$$R^6_a-\underset{\underset{\frac{O_{4-(a+b)}}{2}}{|}}{Si}(OR^7)_b$$

où

$R^6$ est un reste alkyle ayant de 1 à 8 atomes de carbone ou un reste phényle,
$R^7$ est un reste alkyle ayant de 1 à 4 atomes de carbone,
a = 0,8 à 1,2, et
b = 0,2 à 1,2.